# EUROPÄISCHE PATENTANMELDUNG

(11) **EP 4 631 654 A2**
(43) Veröffentlichungstag der Anmeldung: **15.10.2025**
(21) Anmeldenummer: 25167160.8
(22) Anmeldetag: 28.03.2025
(51) Int. Cl.: B23B 31/40

(54) **VORRICHTUNG ZUR HANDHABUNG EINES SPANNSTÖSSELS**

(30) Priorität: 11.04.2024 DE 102024110181
(71) Anmelder: Adelbert Haas GmbH, 78647 Trossingen (DE)
(72) Erfinder: Zepf, Timo, 78606 Seitingen-Oberflacht (DE)
(74) Vertreter: Westphal, Mussgnug & Partner Patentanwälte mbB

(57) **Zusammenfassung**

Die Erfindung betrifft eine Vorrichtung (10) zur Handhabung eines einen Schaft (110) mit einer Längsachse (L) und einem Kragen (112) aufweisenden Spannstößels (100) mit einem in wenigstens einer Raumrichtung (X) verfahrbaren Arm (20) mit einem ersten Ende (20a), an welchem eine Befestigungseinheit (30) zur Befestigung des Spannstößels (100) angeordnet ist, wobei die Befestigungseinheit (20) ein magnetisches oder magnetisierbares Anlageelement (31) zur magnetischen Befestigung des Spannstößels (100) aufweist sowie ein Verfahren zum Wechsel eines Werkzeugs oder eines Werkstücks (300) an einer Werkzeugmaschine (200) unter Verwendung einer derartigen Vorrichtung (10).

## Beschreibung

Die Erfindung betrifft eine Vorrichtung zur Handhabung eines Spannstößels.

Werkzeugmaschinen werden in immer weitergehendem Maße automatisiert betrieben. Dies bringt insbesondere mit sich, dass auch der Werkzeugwechsel beim Betrieb einer solchen Werkzeugmaschine teil- oder vollautomatisiert durchgeführt wird. Dabei ist es gängige Praxis, die verschiedenen Werkzeuge über eine Werkzeugaufnahme mit einer Spindel, einer Rotationsachse oder einem sonstigen Teilapparat der Werkzeugmaschine zu verbinden.

Es gibt auch Fälle, bei denen das zu bearbeitende Werkstück mit der Spindel, der Rotationsachse oder dem sonstigen Teilapparat der Werkzeugmaschine gekoppelt wird. Um dies zu verdeutlichen, wird im Folgenden der Begriff "Werkzeug- oder Werkstückaufnahme" verwendet, obwohl eigentlich jede Werkzeugaufnahme grundsätzlich auch eine Werkstückaufnahme ist bzw. zu einer Werkstückaufnahme wird, wenn das Spannmittel, in das bestimmungsgemäß bei einer Werkzeugaufnahme das Werkzeug aufgenommen wird, zum Halten eines Werkstücks verwendet wird.

Bekannt ist es, Werkzeuge oder Werkstücke, welche ein axiales Loch aufweisen, mittels eines Spannstößels, welcher insbesondere einen langgestreckten zylindrischen Schaft mit einem Kragen, welcher insbesondere eine radiale Verdickung bildet, an einem Ende aufweist, in der Werkzeug- oder Werkstückaufnahme zu befestigen. Dazu wird der Spannstößel durch das Loch geführt und der zylindrische Schaft des Spannstößels in einem Spannfutter der Werkzeug- oder Werkstückaufnahme gefasst und in axialer Richtung derart weit eingezogen, dass das Werkzeug oder Werkstück an einer Stirnseite der Werkzeug- oder Werkstückaufnahme anliegt und zwischen der Stirnseite der Werkzeug- oder Werkstückaufnahme und dem Kragen des Spannstößels gespannt gehalten ist.

Ein Wechsel des Werkzeugs oder Werkstücks ist aufwendig: Entweder muss mit einer separaten Handhabungseinheit das Werkzeug oder Werkstück gehalten werden, während mit einer weiteren Handhabungseinheit der Spannstößel aus dem Loch des Werkzeugs oder Werkstücks herausgezogen werden muss, wozu auf der dem Schaft abgewandten Seite des Kragens ein Vorsprung angeordnet sein muss, an welchem die Handhabungseinheit den Spannstößel greifen kann. Alternativ muss mit einer Handhabungseinheit das Werkzeug oder Werkstück gemeinsam mit dem Spannstößel aus der Werkzeug- oder Werkstückaufnahme herausgezogen werden, um ein anderes Werkzeug oder Werkstück gemeinsam mit einem anderen Spannstößel wieder einzuführen, wodurch einerseits die Zustellwege und die Zahl der Handhabungsschritte vergrößert werden und andererseits eine größere Zahl an Spannstößels bereitgehalten werden muss.

Die Aufgabe der Erfindung besteht daher darin, eine Vorrichtung zur Handhabung eines Spannstößels bereitzustellen, mit welcher ein vereinfachter Wechsel eines Werkzeugs oder Werkstücks an einer Werkzeugmaschine ermöglicht werden kann.

Die Aufgabe wird erfindungsgemäß gelöst durch eine Vorrichtung zur Handhabung eines Spannstößels mit den Merkmalen des Patentanspruchs 1, durch ein Set umfassend eine Vorrichtung zur Handhabung eines Spannstößels und eine Werkzeugmaschine mit den Merkmalen des Patentanspruchs 10 sowie ein Verfahren zum Wechsel eines Werkzeugs oder eines Werkstücks an einer Werkzeugmaschine mit den Merkmalen des Patentanspruchs 12.

Vorteilhafte Ausgestaltungen und Weiterbildungen der Erfindung sind in den abhängigen Ansprüchen angegeben.

Die erfindungsgemäße Vorrichtung zur Handhabung eines einen Schaft mit einer Längsachse und einem Kragen aufweisenden Spannstößels mit einem in wenigstens einer Raumrichtung verfahrbaren Arm mit einem ersten Ende, an welchem eine Befestigungseinheit zur Befestigung des Spannstößels angeordnet ist, zeichnet sich dadurch aus, dass die Befestigungseinheit ein magnetisches oder magnetisierbares Anlageelement zur magnetischen Befestigung des Spannstößels aufweist. Da der Spannstößel üblicherweise aus einem Metall gefertigt ist, ist es mithilfe eines magnetischen oder magnetisierbaren Anlageelements möglich, den Spannstößel deutlich schneller an dem Befestigungselement zu befestigen als beispielsweise mit einem Greifelement. Zudem ermögliche ein magnetisches oder magnetisierbares Anlageelement ein Befestigen nicht nur aus radialer Richtung zum Spannstößel, sondern auch in axialer Richtung des Spannstößels, was Vorteile bei der Handhabung des Spannstößels mit sich bringt.

Gemäß einer bevorzugten Ausführungsform umfasst das Anlageelement einen Dauermagneten, welcher eine Befestigung ohne zusätzliche Komponenten, insbesondere ohne die Notwendigkeit einer Stromversorgung, lediglich durch Annäherung des Anlageelements an den Spannstößel ermöglichen kann.

Gemäß einer weiteren vorteilhaften Ausführungsform umfasst das Anlageelement einen Elektromagneten. Dadurch kann die Befestigungseinheit gezielt ein- und ausgeschaltet werden, was je nach Anwendung wünschenswert sein kann.

Vorteilhafterweise ist das Anlageelement an der Stirnseite des Arms angeordnet. Dadurch kann eine räumlich günstige Anordnung erreicht werden, welche insbesondere bei eine Annäherung des Anlageelements an den Spannstößel in axialer Richtung oder mit anderen Worten in Richtung parallel zur Längsachse des Spannstößels von Vorteil sein kann.

Vorzugsweise weist das Anlageelement eine Ausrichtspitze auf. Diese kann bei Anlage des Anlageelements an dem Spannstößel die Positionierung des Spannstößels relativ zum Anlageelement festlegen, insbesondere, wenn der Spannstößel insbesondere an seiner Stirnseite eine entsprechende Ausnehmung aufweist, in welche die Ausrichtspitze bei Anlage des Anlageelements an dem Spannstößel eintaucht. Eine derartige Ausrichtspitze kann auch die Kippsicherheit verbessern und ein seitliches Verschieben oder Verrutschen verhindern.

Eine besonders bevorzugte Weiterbildung der Erfindung sieht vor, dass das Anlageelement einen Auswerfpin aufweist, welcher relativ zu dem Anlageelement verfahrbar ausgebildet ist. Ein derartiger Auswerfpin ermöglicht es, die magnetische Befestigung zwischen dem Anlageelement und dem Spannstößel auf einfache Art und Weise zu lösen, indem der Auswerfpin relativ zu dem Anlageelement verfahren wird, um den Spannstößel von dem Anlageelement zu entfernen.

Vorzugsweise ist der Auswerfpin federbelastet in einer eingefahrenen Position angeordnet ist und gegen die Federkraft in eine ausgefahrene Position überführbar, vorzugsweise mittels einer Pneumatikeinheit. Durch eine derartige Ausgestaltung kann ein gezieltes Lösen der Befestigung zwischen Spannstößel und Anlageelement erfolgen, während der Auswerfpin ansonsten den Befestigungsvorgang nicht beeinflusst, da er sich üblicherweise in einer eingefahrenen Position befindet.

Gemäß einer bevorzugten Ausführungsform ist die Ausrichtspitze an dem Auswerfpin angeordnet. Dadurch kann ein besonders kompakter Aufbau erreicht werden.

Besonders bevorzugt ist der Arm in genau einer Raumrichtung verfahrbar, wobei die Längsachse eines an der Befestigungseinheit befestigten Spannstößels parallel zu dieser Raumrichtung angeordnet ist. Dadurch kann der Bewegungsaufwand bei einem Wechsel eines Werkzeugs oder Werkstücks gering gehalten werden.

Eine wie zuvor beschriebene Vorrichtung ist insbesondere Teil eines Sets umfassend weiterhin eine Werkzeugmaschine mit mindestens einer Spindel, einer Rotationsachse oder einem Teilapparat, an welcher oder welchem eine Werkzeug- oder Werkstückaufnahme angeordnet ist, wobei die Vorrichtung derart relativ zu der Werkzeugmaschine angeordnet ist, dass eine Drehachse der Spindel, der Rotationsachse oder des Teilapparats parallel zu der Längsachse eines an der Befestigungseinheit befestigten Spannstößels sowie zu der wenigstens einen Raumrichtung, in welcher der Arm verfahrbar ist, angeordnet ist. Vorzugsweise ist dabei der Arm in genau einer Raumrichtung verfahrbar, so dass im Wesentlichen eine lineare Vor- und Zurückbewegung erfolgt. Mit einem derartigen Set kann der Bewegungsaufwand bei einem Wechsel eines Werkzeugs oder Werkstücks gering gehalten werden und ein Wechsel schnell und effektiv erfolgen.

Ein erfindungsgemäßes Verfahren zum Wechsel eines Werkzeugs oder eines Werkstücks an einer Werkzeugmaschine, wobei das Werkzeug oder das Werkstück mittels eines Spannstößels in einer Werkzeug- oder Werkstückaufnahme spannend gehalten ist, umfasst die folgenden Schritte:
- Greifen des in der Werkzeug- oder Werkstückaufnahme spannend gehaltenen Werkzeugs oder Werkstücks mit einer ersten Handhabungseinheit,
- Verfahren des Arms einer Vorrichtung zur Handhabung eines Spannstößels nach einem der Ansprüche 1 bis 9 in einer Raumrichtung derart weit, bis das Anlageelement der Befestigungseinheit an dem Spannstößel anliegt,
- Herausziehen des Spannstößels durch Zurückfahren des Arms in der Raumrichtung derart weit, bis der Spannstößel vollständig aus dem Loch des Werkzeugs oder Werkstücks herausgezogen ist,
- Entfernen des Werkzeugs oder Werkstücks mittels der ersten Handhabungseinheit,
- Zuführen eines neuen Werkzeugs oder Werkstücks,
- Einfahren des Spannstößels durch Verfahren des Arms mit dem Spannstößel in der Raumrichtung derart weit, bis der Kragen des Spannstößels an dem neuen Werkzeug oder Werkstück anliegt.

Durch ein derartiges Verfahren kann ein Wechsel eines Werkzeugs oder Werkstücks dadurch erfolgen, dass lediglich der Spannstößel mittels der Vorrichtung zur Handhabung des Spannstößels herausgezogen und das Werkzeug oder Werkstück mittels einer Handhabungseinheit getauscht werden kann. Das magnetische oder magnetisierbare Anlageelement ermöglicht dabei ein einfaches und schnelles Befestigen des Spannstößels, insbesondere in axialer Richtung des Spannstößels, wodurch Bewegungsabläufe vereinfacht werden können.

Vorzugsweise wird der Arm in genau einer Raumrichtung verfahren. Dadurch kann der Bewegungsaufwand minimiert werden, was einen schnellen Wechsel des Werkzeugs oder Werkstücks ermöglichen kann.

Vorzugsweise erfolgt das Zuführen des neuen Werkzeugs oder Werkstücks mittels einer zweiten Handhabungseinheit, was die erforderliche Zeit für den Wechsel im Vergleich zur Verwendung lediglich einer einzigen Handhabungseinheit signifikant verkürzen kann.

Vorteilhafterweise wird vor dem Herausziehen des Spannstößels die Befestigung des Spannstößels in der Werkzeug- oder Werkstückaufnahme gelöst und nach dem Einfahren des Spannstößels der Spannstößel in der Werkzeug- oder Werkstückaufnahme wieder befestigt.

Gemäß einer vorteilhaften Weiterbildung wird nach dem Einfahren des Spannstößels ein Auswerfpin der Vorrichtung vorgeschoben, um den Spannstößel von der Vorrichtung zu lösen. Wird danach die Vorrichtung von der Werkzeugmaschine entfernt, verbleibt der Spannstößel in der Werkzeug- oder Werkstückaufnahme. Der Auswerfpin kann dabei auch soweit vorgeschoben werden, dass der Kragen des Spannstößels in die Senkbohrung des Lochs des Werkzeugs oder Werkstücks gedrückt wird.

Die Erfindung wird anhand der nachfolgenden Figuren ausführlich erläutert. Es zeigen
- Fig. 1: eine perspektivische Ansicht eines Teils eines Ausführungsbeispiels einer erfindungsgemäßen Vorrichtung zur Handhabung eines Spannstößels mit einer Befestigungseinheit mit einem Anlageelement und einem Auswerfpin,
- Fig. 2: eine teilgeschnittene perspektivische Ansicht der Vorrichtung gemäß Fig. 1,
- Fig. 3: einen Längsschnitt durch den Teil der Vorrichtung gemäß Fig. 1,
- Fig. 4: einen weiteren Längsschnitt durch den Teil der Vorrichtung gemäß Fig. 1 mit einem an der Vorrichtung befestigten Spannstößel,
- Fig. 5: einen Längsschnitt durch den Teil der Vorrichtung gemäß Fig. 1 mit einem an der Vorrichtung befestigten Spannstößel, welcher ein Werkzeug oder Werkstück an einer Werkzeug- oder Werkzeugaufnahme fixiert,
- Fig. 6: die Ansicht gemäß Fig. 4, wobei der Auswerfpin ausgefahren ist,
- Fig. 7: die Ansicht gemäß Fig. 5, wobei der Auswerfpin ausgefahren ist,
- Fig. 8: eine perspektivische Ansicht einer Werkzeugmaschine und des Teils der Vorrichtung gemäß Fig. 1 mit daran angeordnetem Spannstößel sowie mit einem verfahrbaren Arm,
- Fig. 9: eine perspektivische Ansicht der Vorrichtung zur Handhabung des Spannstößels aus Fig. 8 in einer vorgefahrenen Position,
- Fig. 10: eine weitere perspektivische Ansicht der Vorrichtung zur Handhabung des Spannstößels aus Fig. 8 in einer zurückgezogenen Position,
- Fig. 11: eine Seitenansicht der Vorrichtung gemäß Fig. 10,
- Fig. 12: eine Seitenansicht der Vorrichtung mit Werkzeugmaschine gemäß Fig. 8 mit zurückgezogenem Spannstößel und
- Fig. 13: eine Schnittdarstellung der Vorrichtung mit Werkzeugmaschine gemäß Fig. 12 mit von dem Anlageelement gelöstem Spannstößel.

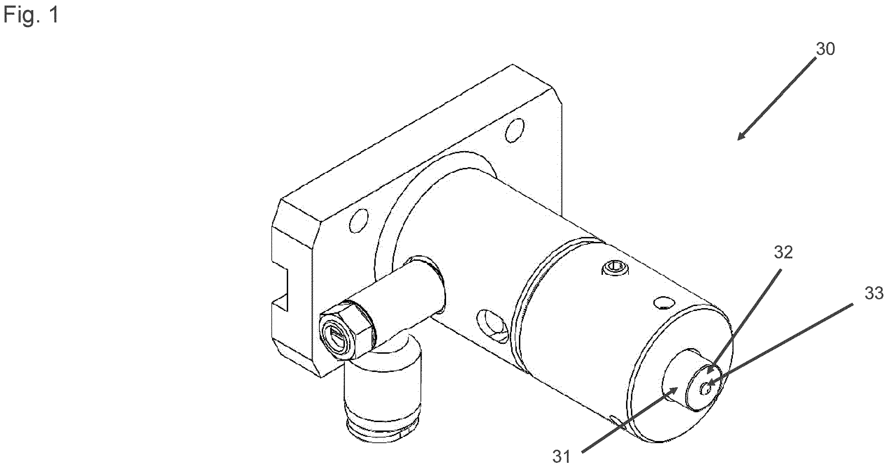

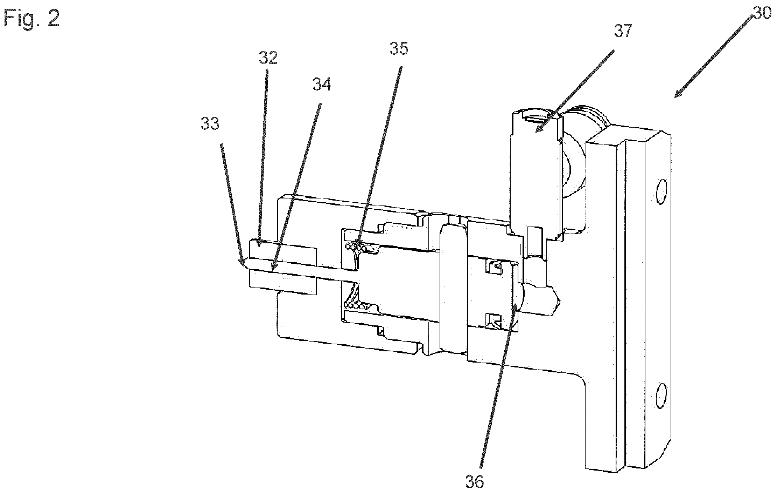

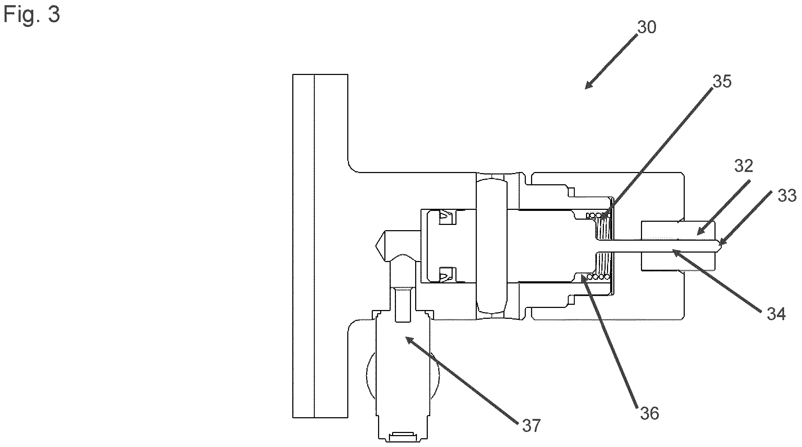

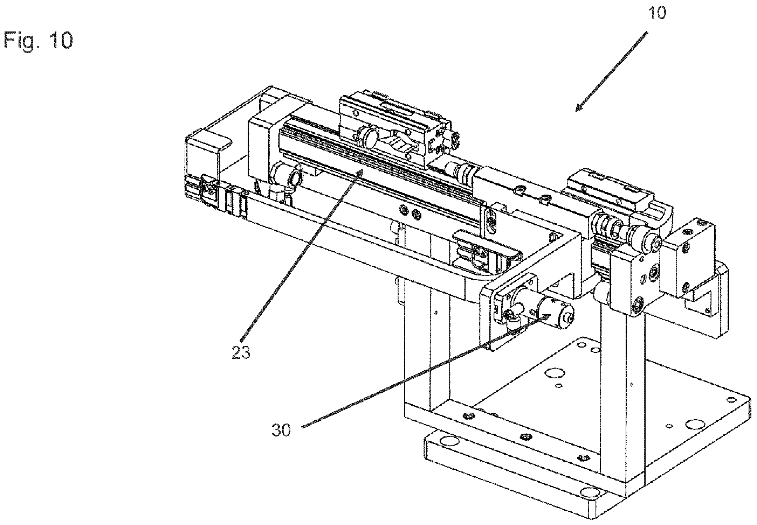

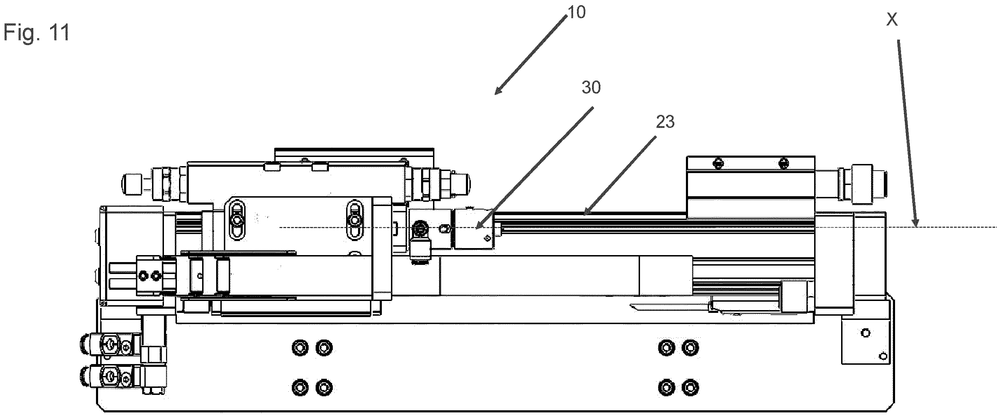

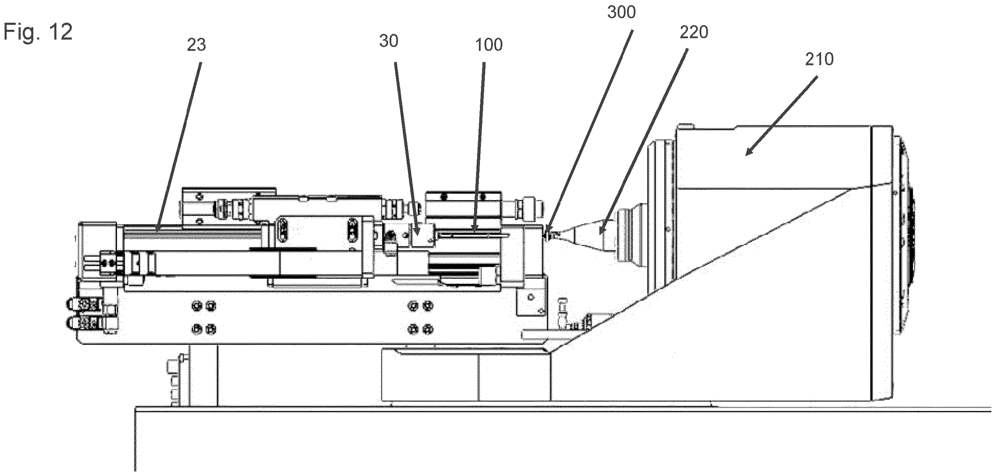

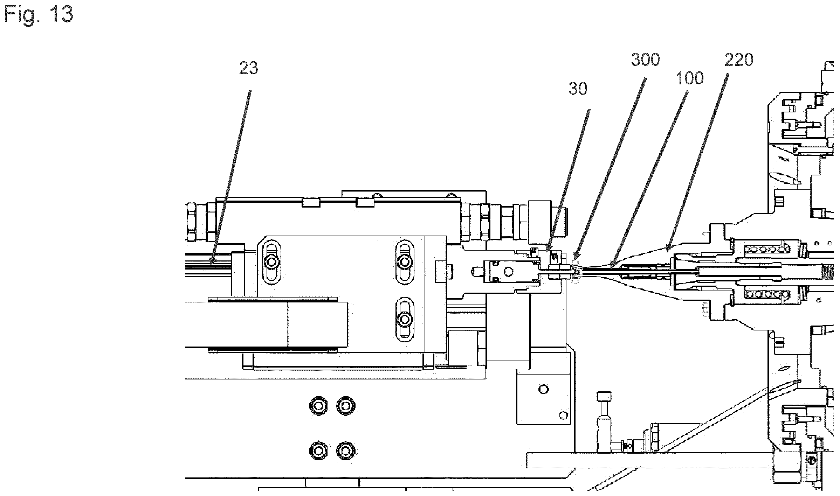

Die Figuren 1 bis 13 zeigen verschiedene Ansichten einer Vorrichtung 10 zur Handhabung eines Spannstößels 100 sowie Teilen davon und deren Anordnung relativ zu einer Werkzeugmaschine 200.

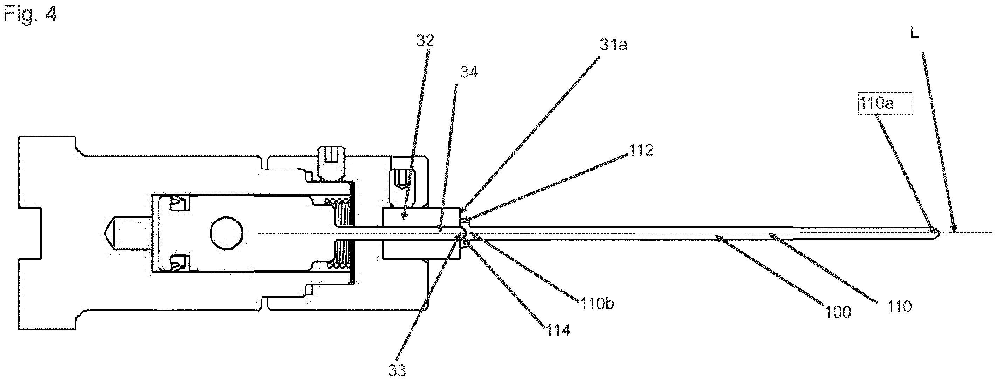

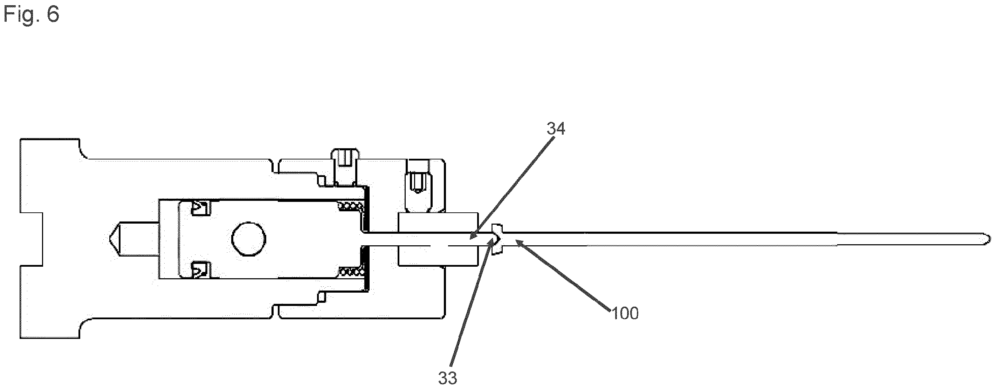

Der Spannstößel 100, der insbesondere in den Figuren 4 und 6 erkennbar ist, weist einen zylindrischen, langgestreckten Schaft 110 mit einer Längsachse L, einem ersten Ende 110a und einem zweiten Ende 110b auf. Das erste Ende 110a kann abgerundet oder verjüngend ausgebildet sein. An dem zweiten Ende 110b ist ein Kragen 112 angeordnet, welcher insbesondere eine radiale Verdickung umfasst und beispielsweise nach Art eines Kopfs einer Schraube oder eines Nagels ausgebildet sein kann. Der Stößel 100 kann an einer Stirnseite an dem zweiten Ende 110b eine Ausnehmung 114 aufweisen, welche insbesondere in axialer Richtung verläuft. Die Ausnehmung 114 kann rotationssymmetrisch ausgebildet sein. Der Spannstößel 100 ist üblicherweise aus Metall gefertigt.

Mit dem Spannstößel 100 kann ein Werkzeug oder Werkstück 300 an einer Werkzeug- oder Werkstückaufnahme 220 einer Spindel oder Rotationsachse oder eines Teilapparats 210 der Werkzeugmaschine 200 befestigt werden. Das Werkzeug oder Werkstück 300 weist ein durchgehendes Loch 310 auf, durch welches der Spannstößel 100 mit dem ersten Ende 110a voran geführt werden kann derart weit, bis der Kragen 112, welcher einen größeren Außendurchmesser aufweist als das Loch 310, an dem Werkzeug oder Werkstück 300 anliegt. Der Spannstößel 100 kann in der Werkzeug- oder Werkstückaufnahme 220 durch eine entsprechende Greifvorrichtung gegriffen und fixiert werden, wobei insbesondere durch Hineinziehen in die Werkzeug- oder Werkstückaufnahme 220 eine spannende Fixierung des Werkzeugs oder Werkstücks 300 erreicht werden kann. Dadurch, dass der Spannstößel 100 an seinem zweiten Ende 110a lediglich den Kragen 112 oder mit anderen Worten einen Kopf nach Art einer Schraube oder eines Nagels aufweist, kann, wenn das Loch 310 eine Senkbohrung 312 aufweist, eine versenkte Anordnung des Kragens 112 in der Senkbohrung 312 erreicht und somit ein Hervorstehen eines Teils des Spannstößels 100 über das Werkzeug oder Werkstück 300 vermieden werden.

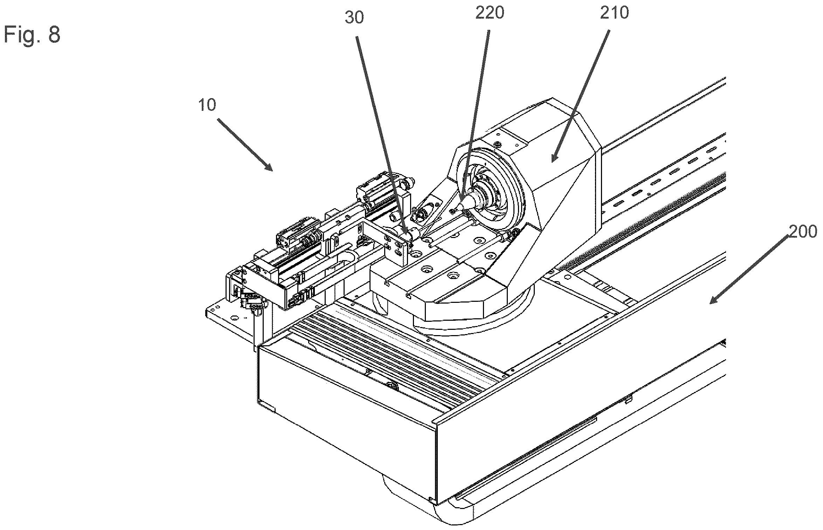

Die Vorrichtung 10 zur Handhabung des Spannstößels 100 umfasst einen in wenigstens einer Raumrichtung X verfahrbaren Arm 20 (vgl. insbesondere Figuren 8 bis 13) mit einem ersten Ende 20a, an welchem eine Befestigungseinheit 30 (vgl. insbesondere Figuren 1 bis 7) zur Befestigung des Spannstößels 100 angeordnet ist.

Die Befestigungseinheit 30 weist ein magnetisches oder magnetisierbares Anlageelement 31 zur magnetischen Befestigung des Spannstößels 100 auf. In der dargestellten Ausführungsform umfasst das Anlageelement 31 einen Dauermagneten 32. Alternativ oder zusätzlich kann das Anlageelement 31 einen Elektromagneten umfassen (nicht dargestellt).

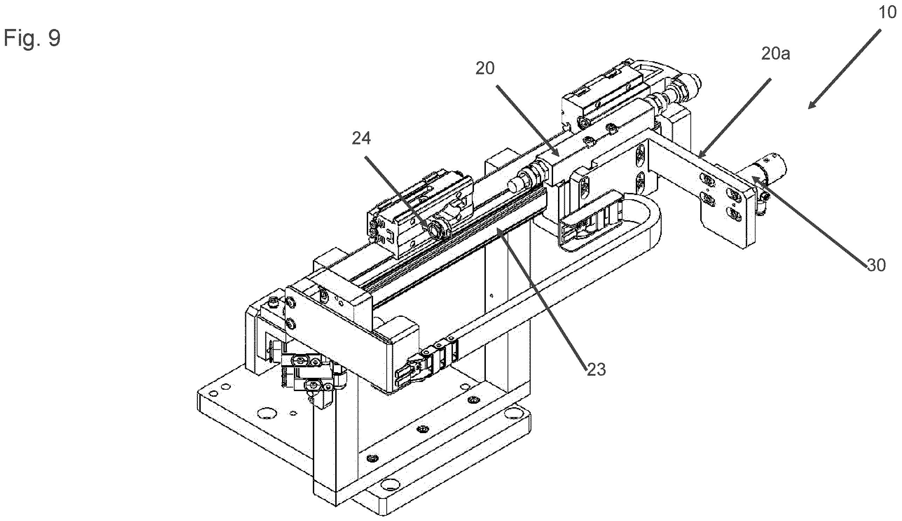

Das Befestigungselement 30, insbesondere das Anlageelement 31, kann an einer Stirnseite 22 des Arms 20a angeordnet sein (vgl. beispielsweise Figur 9).

Das Anlageelement 31 kann eine Ausrichtspitze 33 aufweisen, welche, wie insbesondere in den Figuren 4 bis 7 erkennbar ist, in die Ausnehmung 114 des Spannstößels 100 eintauchen kann. Dabei ragt die Ausrichtspitze 33 insbesondere um eine derartige Länge über eine Anlagefläche 31a des Anlageelements 31 hervor, dass die Stirnseite des zweiten Endes 110b des Spannstößels 100 an der Anlagefläche 31a anliegt, wenn die Ausrichtspitze 33 in die Ausnehmung 114 des Spannstößels eingetaucht ist (vgl. Figur 4). Auf diese Weise kann eine Ausrichtung des Spannstößels 100 erfolgen, insbesondere derart, dass die Längsachse L des Spannstößels im Wesentlichen senkrecht zur Anlagefläche 31a oder auch derart, dass die Längsachse L parallel zur Raumrichtung X verlaufend angeordnet ist.

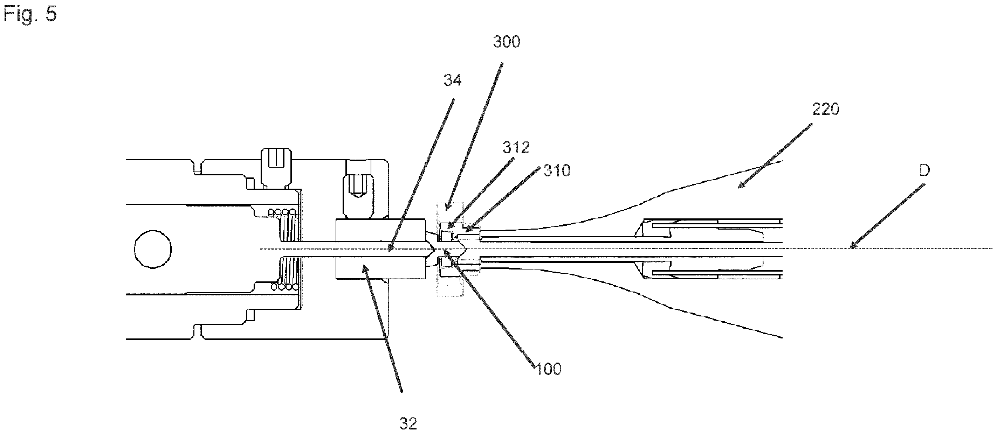

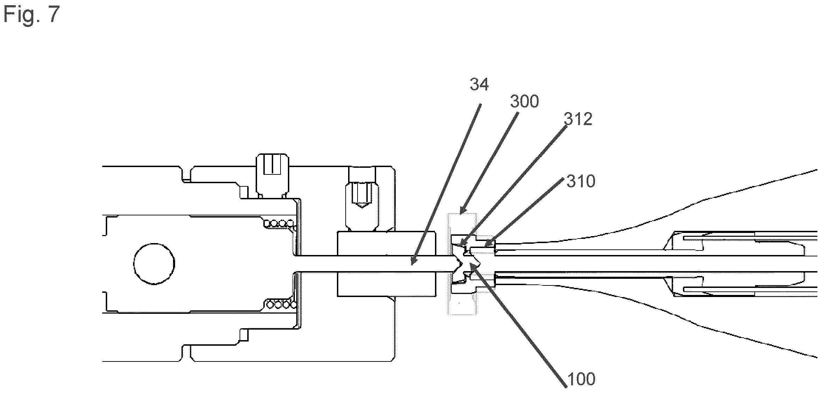

Das Anlageelement 31 kann einen Auswerfpin 34 aufweisen, welcher relativ zu dem Anlageelement 31, insbesondere relativ zur Anlagefläche 31a, verfahrbar ausgebildet ist. In dem vorliegenden Ausführungsbeispiel ist die Ausrichtspitze 33 an dem Auswerfpin 34 angeordnet. Wird der Auswerfpin 34 aus der eingefahrenen Position (vgl. Figuren 4 und 5), in welcher die Stirnseite des zweiten Endes 110b des Spannstößels 100 an der Anlagefläche 31a anliegt, in eine ausgefahrene Position (vgl. Figuren 6 und 7) ausgefahren, wird die magnetische Fixierung zwischen dem Spannstößels 100 und dem Anlageelement 31 gelöst. Insbesondere kann dadurch der Spannstößel 100, insbesondere der Kragen 112 des Spannstößels 100, in die Senkbohrung 312 des Lochs 310 des Werkzeugs oder Werkstücks 300 gedrückt werden.

Der Auswerfpin 34 kann durch eine Feder 35 federbelastet in einer eingefahrenen Position angeordnet sein und gegen die Federkraft der Feder 35 in eine ausgefahrene Position überführbar sein. Das Ausfahren des Auswerfpins 34 kann beispielsweise mittels einer Pneumatikeinheit 36 erfolgen. Über einen Luftanschluss 37 kann der Pneumatikeinheit 36 Druckluft zugeführt werden, um den Auswerfpin 34 gegen die Federkraft der Feder 35 in die ausgefahrene Position zu überführen.

Der Arm 20 ist vorzugsweise in genau einer Raumrichtung X verfahrbar, beispielsweise entlang einer Linearachse 23. Die Bewegung des Arms 20 kann durch einen Anschlag 24 begrenzt werden. Das Anlageelement 31 ist an dem Arm 20 insbesondere derart angeordnet, dass die Längsachse L des an der Befestigungseinheit 30, insbesondere dem Anlageelement 31, befestigten Spannstößels 100 parallel zu dieser Raumrichtung X angeordnet ist.

Der Arm 20 ist vorzugsweise derart relativ zu der Werkzeugmaschine 200 angeordnet, dass eine Drehachse D der Spindel, der Rotationsachse oder des Teilapparats 210 parallel zu der Längsachse L des an der Befestigungseinheit 30 befestigten Spannstößels 100 sowie zu der wenigstens einen, insbesondere genau einen, Raumrichtung X, in welcher der Arm 20 verfahrbar ist, angeordnet ist.

Ein Wechsel des Werkzeugs oder Werkstücks 300 an der Werkzeugmaschine 200, wobei das Werkzeug oder das Werkstück 300 mittels des Spannstößels 100 in der Werkzeug- oder Werkstückaufnahme 220 spannend gehalten ist, kann folgendermaßen erfolgen: Das in der Werkzeug- oder Werkstückaufnahme 220 spannend gehaltenen Werkzeug oder Werkstück 300 wird mit einer ersten Handhabungseinheit gegriffen. Anschließend wird der Arm 20 der Vorrichtung 10 zur Handhabung des Spannstößels 100 in der Raumrichtung X derart weit verfahren, bis das Anlageelement 31 der Befestigungseinheit 30 an dem Spannstößel 100, insbesondere der Stirnseite an dem zweiten Ende 100b, anliegt. Die Vorrichtung 10 ist dabei insbesondere derart relativ zur Werkzeugmaschine 200 positioniert, dass der Arm 20 lediglich entlang der Linearachse 23 in Raumrichtung X vorgefahren werden muss. Die Befestigung des Spannstößels 100 an der Befestigungseinheit 30 erfolgt dabei aufgrund des magnetischen oder magnetisierbaren Anlageelements 31 bei Annäherung der Befestigungseinheit 30 an den Spannstößel 100.

Ist der Spannstößel 100 in der Werkzeug- oder Werkstückaufnahme 220 noch fixiert, wird die Fixierung gelöst. Anschließend kann der Spannstößel 100 durch Zurückfahren des Arms 20 in der Raumrichtung X derart weit, bis der Spannstößel 100 vollständig aus dem Loch 310 des Werkzeugs oder Werkstücks 300 herausgezogen ist, herausgezogen werden. Die erste Handhabungseinheit verhindert dabei, dass das Werkzeug oder Werkstück 300 herunterfällt. Sobald der Spannstößel 100 vollständig aus dem Loch 310 des Werkzeugs oder Werkstücks 300 herausgezogen ist, kann das Werkzeug oder Werkstück 300 mittels der ersten Handhabungseinheit entfernt und insbesondere an einer gewünschten Stelle abgelegt werden. Nun kann ein neues Werkzeug oder Werkstück 300 zugeführt werden. Dies erfolgt entweder mittels der ersten Handhabungseinheit, nachdem diese das zu wechselnde Werkzeug oder Werkstück 300 abgelegt hat, oder vorteilhafterweise zur Verkürzung der Wechselzeit mittels einer zweiten Handhabungseinheit, welche das neue Werkzeug oder Werkstück 300 bereits zur Werkzeug- oder Werkstückaufnahme 220 bewegen kann, während das zu wechselnde Werkzeug oder Werkstück 300 mittels der ersten Handhabungseinheit von der Werkzeug- oder Werkstückaufnahme 220 entfernt wird. Sobald das neue Werkzeug oder Werkstück 300 vor der Werkzeug- oder Werkstückaufnahme 220 positioniert ist, wobei insbesondere das Loch 310 mit der Raumrichtung X fluchtet, kann der Spannstößel 100 durch Verfahren des Arms 20 mit dem Spannstößel 100 in der Raumrichtung X derart weit, bis der Kragen 112 des Spannstößels 100 an dem neuen Werkzeug oder Werkstück 300 anliegt, eingefahren werden. Anschließend kann der Auswerfpin 34 insbesondere durch Aktivierung der Pneumatikeinheit 36 ausgefahren werden, um den Spannstößel 100 von der Befestigungseinheit 30 zu lösen. Der Spannstößel 100 kann in der Werkzeug- oder Werkstückaufnahme 220 fixiert und insbesondere noch derart weit in die Werkzeug- oder Werkstückaufnahme hineingezogen werden, bis das Werkzeug oder Werkstück 300 spannend fixiert ist. Dabei kommt insbesondere der Kragen 112 des Spannstößels 100 in der Senkbohrung 312 des Werkzeugs oder Werkstücks 300 derart versenkt zu liegen, dass kein Teil des Spannstößels 100 über das Werkzeug oder Werkstück 300 übersteht.

Dadurch, dass der Spannstößel 100 magnetisch an seiner Stirnseite an dem zweiten Ende 100b fixiert gehalten werden kann, wird es ermöglicht, einen Wechsel des Werkzeugs oder Werkstücks 300 lediglich durch Linearbewegung des Spannstößels 100 entlang der Raumrichtung X durchzuführen.

### Bezugszeichenliste

- 10: Vorrichtung
- 20: Arm
- 20a: erstes Ende
- 22: Stirnseite
- 23: Linearachse
- 24: Anschlag
- 30: Befestigungseinheit
- 31: Anlageelement
- 31a: Anlagefläche
- 32: Dauermagnet
- 33: Ausrichtspitze
- 34: Auswerfpin
- 35: Feder
- 36: Pneumatikeinheit
- 37: Luftanschluss
- 100: Spannstößel
- 110: Schaft
- 110a: erstes Ende
- 110b: zweites Ende
- 112: Kragen
- 114: Ausnehmung
- 200: Werkzeugmaschine
- 210: Spindel, Rotationsachse oder Teilapparat
- 220: Werkzeug- oder Werkstückaufnahme
- 300: Werkzeug oder Werkstück
- 310: Loch
- 312: Senkbohrung
- L: Längsachse
- X: Raumrichtung
- D: Drehachse

## Patentansprüche

1. Vorrichtung (10) zur Handhabung eines einen Schaft (110) mit einer Längsachse (L) und einem Kragen (112) aufweisenden Spannstößels (100) mit einem in wenigstens einer Raumrichtung (X) verfahrbaren Arm (20) mit einem ersten Ende (20a), an welchem eine Befestigungseinheit (30) zur Befestigung des Spannstößels (100) angeordnet ist,
d**adurch gekennzeichnet**, dass die Befestigungseinheit (20) ein magnetisches oder magnetisierbares Anlageelement (31) zur magnetischen Befestigung des Spannstößels (100) aufweist.

2. Vorrichtung nach Anspruch 1,
**dadurch gekennzeichnet, dass** das Anlageelement (31) einen Dauermagneten (32) umfasst.

3. Vorrichtung nach einem der vorhergehenden Ansprüche,
**dadurch gekennzeichnet, dass** das Anlageelement (31) einen Elektromagneten umfasst.

4. Vorrichtung nach einem der vorhergehenden Ansprüche,
**dadurch gekennzeichnet, dass** das Anlageelement (31) an der Stirnseite (22) des Arms (20) angeordnet ist.

5. Vorrichtung nach einem der vorhergehenden Ansprüche,
**dadurch gekennzeichnet, dass** das Anlageelement (31) eine Ausrichtspitze (33) aufweist.

6. Vorrichtung nach einem der vorhergehenden Ansprüche,
**dadurch gekennzeichnet, dass** das Anlageelement (31) einen Auswerfpin (34) aufweist, welcher relativ zu dem Anlageelement (31) verfahrbar ausgebildet ist.

7. Vorrichtung nach einem der vorhergehenden Ansprüche,
**dadurch gekennzeichnet, dass** der Auswerfpin (34) federbelastet in einer eingefahrenen Position angeordnet ist und gegen die Federkraft in eine ausgefahrene Position überführbar ist, vorzugsweise mittels einer Pneumatikeinheit (36).

8. Vorrichtung nach einem der vorhergehenden Ansprüche,
**dadurch gekennzeichnet, dass** die Ausrichtspitze (33) an dem Auswerfpin (34) angeordnet ist.

9. Vorrichtung nach einem der vorhergehenden Ansprüche,
**dadurch gekennzeichnet, dass** der Arm (20) in genau einer Raumrichtung (X) verfahrbar ist, wobei die Längsachse (L) eines an der Befestigungseinheit (30) befestigten Spannstößels (100) parallel zu dieser Raumrichtung (X) angeordnet ist.

10. Set umfassend eine Werkzeugmaschine (200) mit mindestens einer Spindel, einer Rotationsachse oder einem Teilapparat (210), an welcher oder welchem eine Werkzeug- oder Werkstückaufnahme (220) angeordnet ist, und mit einer Vorrichtung (10) nach einem der vorhergehenden Ansprüche, wobei die Vorrichtung (10) derart relativ zu der Werkzeugmaschine (200) angeordnet ist, dass eine Drehachse (D) der Spindel, der Rotationsachse oder des Teilapparats (210) parallel zu der Längsachse (L) eines an der Befestigungseinheit (30) befestigten Spannstößels (100) sowie zu der wenigstens einen Raumrichtung (X), in welcher der Arm (20) verfahrbar ist, angeordnet ist.

11. Set nach Anspruch 10,
**dadurch gekennzeichnet, dass** der Arm (20) in genau einer Raumrichtung (X) verfahrbar ist.

12. Verfahren zum Wechsel eines Werkzeugs oder eines Werkstücks (300) an einer Werkzeugmaschine (200), wobei das Werkzeug oder das Werkstück (200) mittels eines Spannstößels (100) in einer Werkzeug- oder Werkstückaufnahme (220) spannend gehalten ist, mit den Schritten
- Greifen des in der Werkzeug- oder Werkstückaufnahme (220) spannend gehaltenen Werkzeugs oder Werkstücks (300) mit einer ersten Handhabungseinheit,
- Verfahren des Arms (20) einer Vorrichtung (10) zur Handhabung eines Spannstößels (100) nach einem der Ansprüche 1 bis 9 in einer Raumrichtung (X) derart weit, bis das Anlageelement (31) der Befestigungseinheit (30) an dem Spannstößel (100) anliegt,
- Herausziehen des Spannstößels (100) durch Zurückfahren des Arms (20) in der Raumrichtung (X) derart weit, bis der Spannstößel (100) vollständig aus dem Loch (310) des Werkzeugs oder Werkstücks (200) herausgezogen ist,
- Entfernen des Werkzeugs oder Werkstücks (300) mittels der ersten Handhabungseinheit,
- Zuführen eines neuen Werkzeugs oder Werkstücks (300),
- Einfahren des Spannstößels (100) durch Verfahren des Arms (20) mit dem Spannstößel (100) in der Raumrichtung derart weit, bis der Kragen (112) des Spannstößels (100) an dem neuen Werkzeug oder Werkstück (300) anliegt.

13. Verfahren nach Anspruch 12,
**dadurch gekennzeichneet** dass der Arm (20) in genau einer Raumrichtung (X) verfahren wird.

14. Verfahren nach Anspruch 12 oder 13,
**dadurch gekennzeichnet, dass** das Zuführen des neuen Werkzeugs oder Werkstücks (300) mittels einer zweiten Handhabungseinheit erfolgt.

15. Verfahren nach einem der Ansprüche 12 bis 14,
**dadurch gekennzeichnet, dass** vor dem Herausziehen des Spannstößels (100) die Befestigung des Spannstößels (100) in der Werkzeug- oder Werkstückaufnahme (220) gelöst und nach dem Einfahren des Spannstößels (100) der Spannstößel (100) in der Werkzeug- oder Werkstückaufnahme (220) wieder befestigt wird.

16. Verfahren nach einem der Ansprüche 12 bis 14,
**dadurch gekennzeichnet, dass** nach dem Einfahren des Spannstößels (100) ein Auswerfpin (34) der Vorrichtung (10) vorgeschoben wird, um den Spannstößel (100) von der Vorrichtung (10) zu lösen.
